Europäisches Patentamt

European Patent Office

Office européen des brevets

(11) Veröffentlichungsnummer : **0 115 073**
**B1**

(12) # EUROPÄISCHE PATENTSCHRIFT

(45) Veröffentlichungstag der Patentschrift :
04.03.87

(51) Int. Cl.⁴ : **E 21 B 19/16**

(21) Anmeldenummer : 83113136.2

(22) Anmeldetag : 27.12.83

(54) Schalt- und Steuereinrichtung für hydraulisch oder pneumatisch betätigbare Arbeitsgeräte.

(30) Priorität : 03.01.83 DE 3300034

(43) Veröffentlichungstag der Anmeldung :
08.08.84 Patentblatt 84/32

(45) Bekanntmachung des Hinweises auf die Patenterteilung : 04.03.87 Patentblatt 87/10

(84) Benannte Vertragsstaaten :
AT FR GB IT NL SE

(56) Entgegenhaltungen :
FR-A- 2 185 087
GB-A- 1 335 042
US-A- 4 092 881
US-A- 4 280 397

(73) Patentinhaber : Weatherford Oil Tool GmbH
Hainhäuser Weg 150
D-3012 Langenhagen 1 (DE)

(72) Erfinder : Schulze-Beckinghausen, Jörg
Stephanusstrasse 11
D-3008 Garbsen 4 (DE)
Erfinder : Bock, Hans-Christian
Dietrichstrasse 11
D-3167 Burgdorf (DE)

(74) Vertreter : Arendt, Helmut, Dipl.-Ing.
Hubertusstrasse 2
D-3000 Hannover 1 (DE)

## Beschreibung

Die Erfindung betrifft eine Schalt- und Steuereinrichtung für durch strömende Arbeitsmittel beispielsweise hydraulisch oder pneumatisch-betätigbare Arbeitsgeräte, insbesondere für den Betrieb von Verschraubzangen zum Verschrauben von Pumpgestänge, Futter- und Förderrohren der Bohrindustrie.

In der Bohrindustrie werden für das Verschrauben von Pumpgestänge, Futter- und Förderrohren Kraftverschraubzangen eingesetzt. Verschraubzangen werden zum Komplettieren oder Zerlegen von Bohrsträngen und Rohrtouren benötigt.

Eine allgemein eingeführte Verschraubzange mit offenem Rotorsystem wird in DE-C-27 26 472 beschrieben. Sie weist eine Gehäuseöffnung auf, welche zur Aufnahme des Stranges dient. Zangen mit offenem Rotorsystem haben einen sehr großen Marktanteil erworben, da sie sehr schnell zum Verschrauben angeschwenkt und nachher aus dem Arbeitsfeld weggeschwenkt werden können.

Verschraubzangen entwickeln zum Herstellen von Rohrverbindungen sehr hohe Drehmomente. Bei der Kraftabgabe stellen sich Aufbiegekräfte an der Zangenöffnung ein. Zur Entlastung der Gehäusewangen wird eine Verriegelungsklappe installiert. Diese Klappe verstärkt in erster Linie den Zangenkörper und verhindert ein Aufbiegen, was zur Beschädigung oder zum Ausfall des Geräts führt.

Die Zangenverstärkung dient nicht nur als Klappe, sondern gleichzeitig als Schutzeinrichtung für die Bedienungsperson durch Sperrung des Zugangs und Eingriffs in das Rotor- und Spannsystem beim Betrieb.

Die Klappeneinrichtung hat sich als Versteifungs- und Sicherheitsmaßnahme ausgezeichnet bewährt. Es geschieht jedoch häufig, daß Bedienungspersonen wegen vermeintlicher Zeitersparnis die Klappe während des Schraubvorganges geöffnet lassen oder sogar demontieren. Diese Nachlässigkeiten führen zur Gerätebeschädigung, darüberhinaus entsteht zwangsläufig eine Gefahrensituation für beteiligte Personen.

In US-A-2 705 614 wird eine Klappenbetätigung beschrieben, welche die Klappe hydraulisch schließt, sobald das Greifsystem der Zange aktiviert wird, da die Zylinder miteinander verschaltet sind. Diese Art Klappensicherung ist nicht auf andere Verschraubgerätetypen übertragbar. Die Ansteuerung über eine hydraulische Kraft stellt im Augenblick der Betätigung eine Gefährdung für das Personal dar.

Eine Sicherungsmöglichkeit zeigt die US-A-4 170 907. Ein Pneumatikventil fragt die Stellung der Klappe ab und schaltet bei eingeschwenkter Klappe die zugeführte Druckluft auf den Steuerteil eines großvolumigen Wegeventils, welches dann den Hydraulikfluß durch den Antriebsmotor ermöglicht.

Bei geöffneter Klappe ist der Ventilsteuerteil entlüftet und eine Feder schiebt die Ventilspindel in Ausgangsstellung und sperrt den Zufluß von Hydrauliköl zum Motor. Von Nachteil hierbei ist, daß diese Sicherungsart den Zufluß vom Fremdenergie, in diesem Falle von Druckluft, benötigt.

Sicherheitsbestimmungen verlangen, daß ein Kraftschraubgerät jederzeit von einer unbeteiligten Person Kraftlos geschaltet werden kann. Das Gerät darf auch nicht ohne erneute Arbeitsfreigabe betätigt werden können.

Bei Anwendung dieser Bestimmung sind zwei Steuerungsarten bekannt :

Der Zulauf für das Arbeitsgerät wird durch ein großvolumiges Wegeventil hindurch, welches sich auf der Arbeitsplattform befindet, zum Verschraubgerät geführt. Um den Kraftfluß zu unterbrechen, muß das Ventil von Hand umgeschaltet werden, so daß der Zulauf direkt mit dem Rücklauf des Aggregats verbunden wird. Diese Einrichtung ist als Vorschaltgerät für das Arbeitsgerät Zange zu betrachten. Der Anschluß unterbleibt häufig, da dieses Gerät das Mitführen von Zusatzschläuchen für das vorschaltbare Ventil bedingt. Die groß dimensionierten Schläuche werden bei den beengten Platzverhältnissen auf einer Arbeitsbühne hinderlich und stören den Arbeitsablauf.

Bei der zweiten Steuerungsart wird im Aggregat ein Hebelventil durch pneumatische Beaufschlagung eines Zylinders auf Durchgang geschaltet. Hierbei fließt das Hydrauliköl zum Arbeitsgerät. Bei Umsteuerung des Zylinders wird der Ölstrom direkt zum Tank zurückgeführt. Die Umsteuerung in die Abschaltstellung ist durch einen Federrückzug am Hebel bei gleichzeitiger Entlastung des Pneumatikzylinders möglich.

Hydraulische Verschraubgeräte sind Üblicherweise mit einer Druckbegrenzungseinrichtung ausgerüstet, welche als direktgesteuerte Einbaupatrone für die Einlaßsektion einer Ventileinheit ausgebildet ist. Diese Ventile erhalten im Normalfall einen Einstellwert, welcher dem maximalen Arbeitsdruck entspricht. Nur durch Benutzung von großen Werkzeugen ist eine Druckverstellung möglich und am Einsatzort schwer durchzuführen. Die Anpassung der Zangenschraubkraft an die vom Rohrmaterial vorgegebenen Werte erreicht man durch Verstellung der Druckbegrenzung am entfernt stehenden Hydraulikaggregat.

Die technische Weiterentwicklung ließ Verschraubeinheiten entstehen, die nicht mit einem Verbraucher, normalerweise einem Hydraulikmotor, auskommen. Diese Einheiten erreicht man durch den Anbau von Konterzangen, Liftzylindern, Verfahreinheiten und ähnlichem, welche allgemein hydraulisch betrieben werden. Die Zuschaltung von Sektionen in die Handhebel-Ventilsteuerung ermöglicht den Betrieb von Zusatzfunktionen mit Hilfe der Hydraulik des Verschraubgerätes. Jeder Funktion muß durch ein zusätzliches Druckbegrenzungsventil ein maximal zulässiger Druck zugeordnet werden.

Die Vielzahl der Betätigungen läßt komplizeierte Rohrführungen entstehen, deren Durchlaßweiten dem zufließenden Ölstrom nicht entsprechen und somit fließt ein Großteil des Hydrauliköles durch Aufstauen des Flusses über das Haupt-Druckbegrenzungsventil unter Erzeugung von Wärme in den Rücklauf. Für diese Wärmebelastung sind die vorhandenen Aggregate nicht ausgelegt, da beim Betrieb einzelner Funktionen immer der Hauptteil des Ölflusses am Haupt-Druckbegrenzungsventil entspannt wird, dessen Einstellung dem des höchsten Verbrauchers entspricht.

Der Erfindung liegt die Aufgabe zugrunde, Abhilfe zu schaffen und eine vereinfachte Sicherheits- und Steuereinrichtung der eingangs genannten Art so auszubilden, daß mit wesentlich einfacheren Mitteln die sicherheitstechnischen Auflagen, wie vor Beschrieben, erfüllt werden können. Die erfindungsgemäße Lösung zeichnet sich durch ein mit dem Vorlauf des Arbeitsmittels verbundenes Leistungsteil aus, das mit zwei abströmseitigen Anschlüssen ausgerüstet ist, von welchen ein Anschluß mit einem Steuerteil zur Steuerung des Öffnungsquerschnitts des tankseitigen Anschlusses verbunden ist. Besonders vorteilhaft eignet sich ein Leistungsteil mit einem Steuerelement in Form eines kolbenförmigen Ventilkörpers mit gleichgroßen Flächen an beiden vom Druck des Arbeitsmittels beaufschlagbaren Stirnseiten und mit einer in Richtung der Ventilkörperbewegung verlaufenden Bohrung, die an ihrem anströmseitigen Ende eine konische Erweiterung aufweist. Gleichzeitig ist die Anströmseite des Ventilkörpers strömungsgünstig, beispielsweise konisch geformt. Mit dieser so gebildeten kegelstumpfförmigen Mantelfläche liegt der Ventilkörper in Schließstellung an einem Ventilsitz dichtend an und sperrt dadurch die unmittelbare Verbindung des Vorlaufs mit dem Rücklauf in den Tank des Arbeitsgerätes.

Im Gegensatz zu den bekannten Geräten weist die Erfindung nur ein einziges Leistungsteil mit einer großen Durchlaßweite auf. Es kann durch beliebig viele zuschaltbare Steuereinheiten, die in ihren Baumaßen klein ausfallen und verschiedenen Funktionen zugeordnet sind, angesteuert werden. Die Steuerung bedarf keiner Fremdenergie, sondern versorgt sich ebenfalls aus dem Zufluß des Arbeitsmittels zum Leistungsteil. Das Steuerteil enthält die Funktionsinformationen für das Leistungsteil. Die Einrichtung ist damit geeignet, gleichzeitig sowohl Sicherheitsfunktionen als auch anwendungstechnische Funktionen über das Leistungsteil in den Arbeitskreislauf einzubringen.

Die wichtige Funktion der Klappensicherung kann beispielsweise durch eine kleines Schließventil abgefragt werden. Das Leistungsteil wird von einem geringen Ölstrom dem Steueröl, durchflossen. Sobald dieses Öl aufgestaut wird, schließt sich das Leistungsteil und ermöglicht den Zufluß des Arbeitsmittels zu den Verbrauchern. Bei geschlossener Sicherheitsklappe des Arbeitsgerätes wird das entsprechende Steuerventil und anschließend der Ventilkörper im Leistungsteil in Schließstellung gebracht, so daß der freie Durchfluß zum Rücklauf am Leistungsteil gesperrt wird. Es kann sich ein Druckanstieg im Verbraucherkreis einstellen. Die Entlastung des Ölflusses durch das Leistungsteil wird erreicht, sobald das Steuerventil geöffnet wird und das aufgestaute Steueröl sich durch den Rücklaufanschluß entspannen kann. Bei geöffneter Klappe ist es nicht möglich, einen Verbraucher zu aktivieren, da der Hauptzulauf zum Gerät entlastet und somit kraftlos ist. Somit entsteht ein umfassender Schutz für das Gerät und auch für das Personal.

Die Bestimmungen des Gerätesicherheitsgesetzes können in einfacher Weise erfüllt werden, indem parallel zur Klappensicherung der Steuerölstrom über einen dünnen (ca. 20 mm Durchmesser) Schlauch zu einem Sperrventil (z. B. Kugelhahn) geführt wird. Vom Sperrventil führt ein zweiter Schlauch zurück zum Rücklaufanschluß des Verschraubgerätes.

Die Zangenoperation oder die Aktivierung anderer Verbraucher ist nur möglich, wenn das Steueröl an diesem Sperrventil aufgestaut wird. Nur hierdurch ist das Schließen des Leistungsteiles möglich, welches der Verschraubeinheit Drucköl zufließen läßt. Permantes Öffnen sichert das Gerät vor unbefugter Benutzung.

Die Klappensicherung und die Not-Aus-Abschaltung sind einzeln voll wirksam durch eine Parallelschaltung. Das Gerät kann erst dann betrieben werden, wenn beide Kontroll-einrichtungen für den Betrieb geschlossen wurden.

Bei der Erweiterung von Verschraubgeräten durch Zuschalten zusätzlicher Verbraucher entstehen Verschraubeinheiten, deren Krafterzeugende Elemente auf verschiedenen Druckebenen arbeiten. Sie werden jedoch alle aus dem Versorgungskreislauf der Verschraubzange gespeist. Brei dieser erweiterten Schaltung ist es nicht mehr notwendig, die Absicherung des Hauptkreises gegen Überdruck am Druckbegrenzungsventil des Aggregates vorzunehmen.

Beim Erfindungsgegenstand geschieht die Druckbegrenzung des Hydrauliköl-Kreislaufes über denselben Leistungsteil. Das Steueröl wird von der Rückseite des Ventilkörpers im Leistungsteil zu einem Druckbegrenzungs-Vorsteuerventil im Steuerteil geführt, welches im entlasteten Zustand geschlossen ist. Bei Druckanstieg über den Einstellwert hinaus öffnet sich ein Ringspalt am Steuerkegel des Vorsteuerventils und ein Teil des Steueröls fließt zum Rücklaufanschluß. In der Zulauf-Leitung zum Vorsteuer-Druckbegrenzungsventil stellt sich der vorgegebene Druckwert ein, der die Stellung des Ventilkörpers im Leistungsteil entsprechend beeinflußt.

Die Preßkraft eines Hydraulikzylinders für eine Spannfunktion wird in gleicher Weise stufenlos einstellbar. Hierzu wird wiederum an den Steuerölfluß desselben Leistungsteiles ein weiteres Vorsteuer-Abschaltventil angeschlossen, dessen Ansteuerungsleitung mit der Druckversorgung des Hydraulikzylinders verbunden ist. Bei Erreichen des Sollwertes begrenzt das Leistungsteil den Hauptölstrom in dieser Höhe.

Alle Steuerelemente, die das Leistungsteil für seine vielfachen Funktionen aussteuern, sind voneinander unabhängig und können sich grundsätzlich nicht gegeneinander beeinflußen. Bei gleichzeitiger Betätigung mehrerer Arbeitselemente wird immer nur der niedrigste Druckwert im Hauptkreis zugelassen. Bei der Abschaltung durch eine der Sicherheitseinrichtungen ist der Arbeits-Hauptstrom mit dem Rücklauf kurzgeschlossen und die Kraftzuführung zu einem nachgeschalteten Verbraucher verhindert. Die Schutzeinrichtungen wirken somit auf alle zum Arbeitsgerät, beispielsweise Verschraubeinheit, gehörenden Funktionen und erzeugen einen umfassenden Geräte- und Personenschutz. Sogar ein Defekt, Zerstörung oder Abriß einer Steuerleitung führt zur sofortigen Sicherheitsabschaltung im Leistungsteil, welches eine weitere Benutzung des Gerätes unmöglich macht, bis der Defekt beseitigt wird.

Die Steuerventile können in Plattenbauweise erstellt und hierdurch in ihrer Anzahl variierbar und dem Umfang der Steuerung anpaßbar sein. Der Erfindungsgegenstand ist geeignet, zur Nachrüstung an verschiedenen Geräten angebaut zu werden. Er ist voll auf pneumatisch betriebene Geräte anwendbar ; es sind hierfür lediglich die Einzelteile in Gestalt von Pneumatikelementen anstelle von Hydraulikventilen einzusetzen.

In der Zeichnung ist ein Ausfürungsbeispiel der Erfindung rein schematisch dargestellt und nachstehend erläutert. Hierin zeigen :

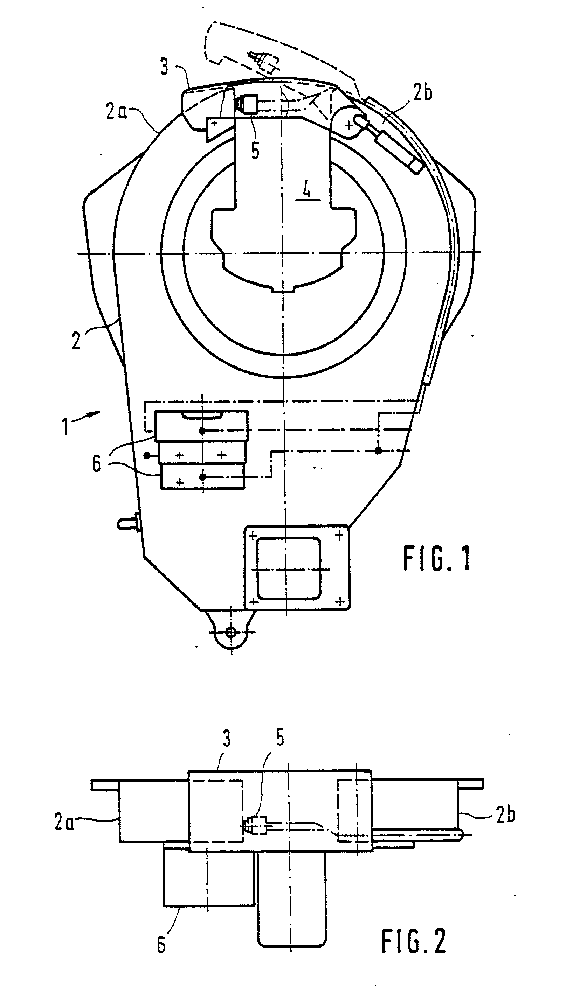

Figur 1 die Draufsicht auf eine Verschraubzange

Figur 2 die Stirnansicht der Verschraubzange gem. Fig. 1

Figur 3 den Schaltplan eines gebräuchlichen Hydraulikkreislaufs für das Arbeitsgerät gem. Fig. 1 mit dem Leistungsteil und dem Steuerteil

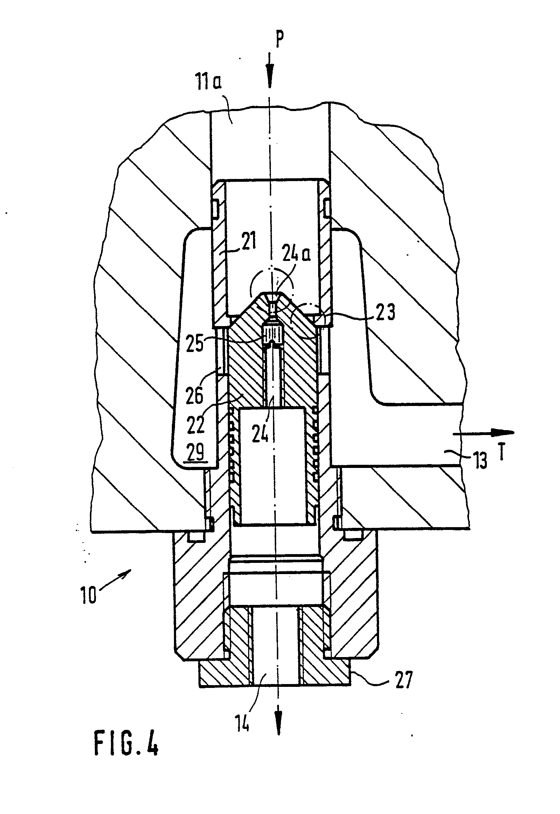

Figur 4 den Längsschnitt durch das Leisungsteil.

Die Verschraubzange 1 mit dem Gehäuse 2 ist mit einer Sicherheits- und Verriegelungsklappe 3 zum Verschließen der Gehäuseöffnung 4 und zur Entlastung der Gehäusewangen 2a und 2b ausgerüstet. An der Innenseite der Verriegelungsklappe 3 ist ein mechanischer Abtastschalter 5 zum Abfragen der Klappenstellung angeordnet. In einem Gehäuseansatz 6 sind die Schaltelemente für die Zagenhydraulik untergebracht.

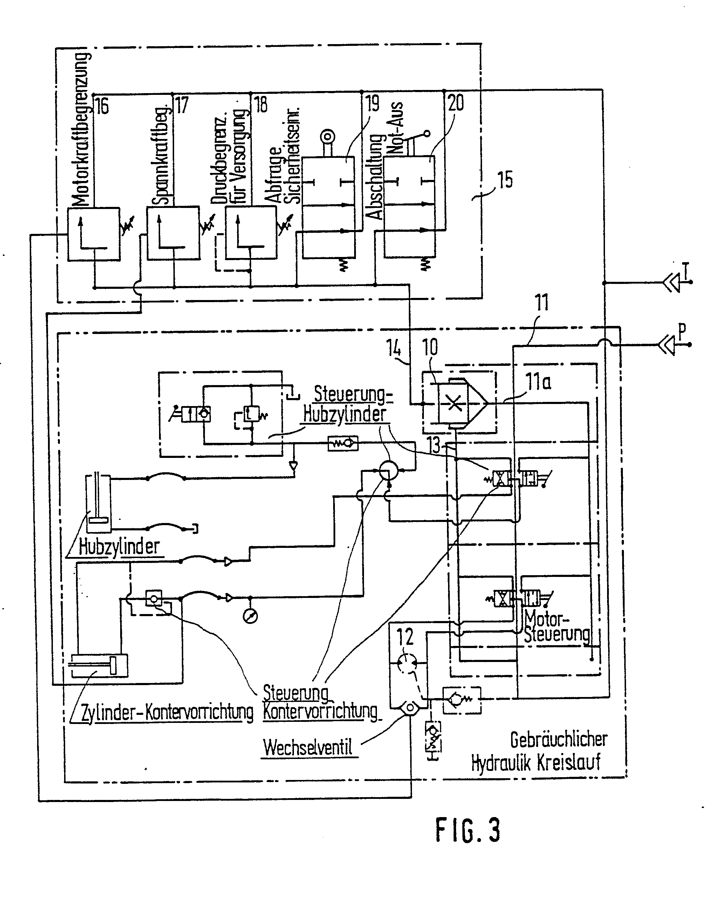

Das Leistungsteil 10 ist über den Anschluß 11a mit dem Vorlauf 11 für den Antriebsmotor 12 des Arbeitsgerätes im Nebenschluß verbunden (Fig. 3). Vom Leistungsteil 10 führt ein Anschluß 13 unmittelbar in den Tankrücklauf. Ein weiterer Anschluß 14 führt zum Steuerteil 15 mit mehreren Steuereinheiten für verschiedene Funktionen. In dem gezeigten Beispiel enthält das Steuerteil 15 Ventile 16, 17, 18, 19, 20 zur Motorkraftbegrenzung, zur Spannkraftbegrenzung, zur Druckbegrenzung für das Arbeitsmittel, für die Abfrage einer Sicherheitseinrichtung, beispielsweise der Sicherheitsklappe 3 und zur Not-Ausschaltung des Arbeitsgerätes.

Das Leistungsteil 10 des gezeigten Beispiels besteht aus einem Ventilgehäuse 21 in Form einer Einschraubpatrone, in welchem ein kolbenförmiger Ventilkörper 22 bewegbar und in Schließstellung an einem ringförmigen Ventilsitz 23 anliegt. Der Ventilkörper ist mit einer in seiner Bewegungsrichtung verlaufenden Bohrung 24 versehen. Am anströmseitigen Ende ist die Bohrung mit einer trichterförmigen Erweiterung 24a ausgeführt. Außerdem ist in die Bohrung eine Durchflußbegrenzungsdüse 25 zur Kalibrierung eingesetzt. Die Durchflußöffnung für das strömende Arbeitsmittel bei Öffnung des Ventils zum Tankrücklauf 13 ist mit 26 bezeichnet. Ein Begrenzungsanschlag 27 am abströmseitigen Ende der Einbaupatrone 21 dient zur Hubbegrenzung des Ventilkörpers 22.

Das Arbeitsmittel fließt dem Leistungsteil 10 durch die stirnseitige Bohrung der hülsenförmigen Einschraubpatrone 21 zu. Im unteren Teil verjüngt sich die Bohrung absatzartig und bildet eine Umlaufkante 23, welche als Dichtfläche für den Ventilkörper 22 dient. Sobald der Ventilkörper mit seiner Stirnseite diese Dichtkante berührt, ist der Durchfluß des Arbeitsmittels durch die Einschraubpatrone, d. h. durch die abgesetzte Dichtboh rungen 26 zum Rücklaufanschluß 13 gesperrt.

Der Zufluß des Arbeitsmittels wird durch die Einschraubdüse 25 genau begrenzt, sie ist auf die Größe der im Steuerteil 15 angeordneten Steuerelemente 16 bis 20 abgestimmt und beeinflußt die Schaltgeschwindigkeit. Steuerventile 16 bis 20 sind gemeinsam durch den Anschluß 14 Leistungsteil 10 verbunden. Sobald alle Vorsteuerventile geschlossen sind, baut sich über die Steuerdüse hinter dem Ventilkörper 22 ein Druck auf, welcher in geringem Maße über dem des Zulaufs liegt. Diese Kraft bewegt den Ventilkörper entgegen der Anströmrichtung auf die Dichtkante 23 zu und sperrt anschließend den Durchfluß. In diesem Moment erhält die Ventilkörperrückseite einen Flächenüberschuß, da die Zulauffläche durch die Berührung des Ventilkörpers mit der Dichtkante verkleinert wird. Der Flächenüberfluß bewirkt eine stabile Schaltstellung des Ventilkörpers in geschlossenem Zustand des Leistungsteiles.

Die Schließkraft für die Schließbewegung des Ventilkörpers 22 wird durch die Gestaltung des Düsenzuflusses 24a erreicht. Der Trichter- bzw. düsenförmige Einlauf steht als direkte Anströmfläche in der Mitte des Zulaufstromes, welcher durch die konische Ausbildung der Ventilkörperanströmseite bei geöffneten Ventilkörper eine sanfte Umlenkung in den Rücklaufringraum 29 außerhalb des Leistungsteiles erfährt.

Das anströmende Arbeitsmittel wird im trichterförmigen Einlauf 24a der Bohrung 24 auf die Durchflußbegrenzungsdüse 25 konzentriert. Es entsteht ein Staudruck, der sich durch die Bohrung 24 hindurch in den Raum auf der Ventilkörperrückseite fortsetzt und dort den Druck über den anströmseitigen Druck hinaus erhöht. Dadurch erfährt der Ventilkörper in geöffnetem Zustand eine Schließbewegung, obwohl bis zum Moment des Dichtens die Fläche der Ventilkörperanströmseite ebenso groß ist wie die Fläche auf der Abströmseite und eine Feder für die Rückstellung nicht eingesetzt ist. Die Bewegungskraft für den Ventilkörper paßt sich dadurch selbständig den Durchlaufverhältnissen an. Der Einsatz einer zusätzlichen Schließfeder ist gleichwohl dennoch möglich.

## Patentansprüche

1. Schalt- und Steuereinrichtung für durch strömende Arbeitsmittel (hydraulisch oder pneumatisch) betätigbare Arbeitsgeräte, insbesondere für den Betrieb von Verschraubzangen (1) zum Verschrauben von Pumpgestängen, Futter- und Förderrohren der Bohrindustrie, gekennzeichnet durch ein mit dem Vorlauf (11) des Arbeitsmittels verbundenes Leistungsteil (10) mit zwei abströmseitigen Anschlüssen (13, 14), von welchen ein Anschluß (13) mit einer Tankrückführleitung, der andere mit einem Steuerteil (15) zur Steuerung des Öffnungsquerschnittes des tankseitigen Anschlusses verbunden ist.

2. Einrichtung nach Anspruch 1, dadurch gekennzeichnet, daß als Steuerelement innerhalb des Leistungsteiles (10) ein kolbenförmiger Ventilkörper (22) mit gleichgroßen Flächen an beiden Stirnseiten und mit einer in Richtung der Ventilkörperbewegung verlaufenden Bohrung (24) angeordnet ist, welche an ihrem anströmseitigen Ende eine konische Erweiterung (24a) aufweist, und daß die Anströmseite des Ventilkörpers strömungsgünstig geformt ist, mit welcher er in Schließstellung an einem Ventilsitz (23), anliegt.

3. Einrichtung nach den Ansprüchen 1 und/oder 2, dadurch gekennzeichnet, daß die Kolbenbohrung mit einer Durchflußbegrenzungsdüse (25) ausgerüstet ist.

4. Einrichtung nach einem oder mehreren der Ansprüche 1 bis 3, dadurch gekennzeichnet, daß das Leistungsteil (10) als Einschraubpatrone (21) für den direkten Einbau in eine Handhebel-Ventilsektion ausgebildet ist.

5. Einrichtung nach einem oder mehreren der Ansprüche 1 bis 4, dadurch gekennzeichnet, daß das dem Leistungsteil (10) zugeordnete Steuerteil (15) aus mehreren parallel zueinander gehaltenen unterschiedlichen Funktionen zugeordneten Steuereinheiten besteht.

6. Einrichtung nach einem oder mehreren der Ansprüche 1 bis 5, dadurch gekennzeichnet, daß das Steuerteil (15) ein Not-Ausventil (20) für das Arbeitsgerät (12) enthält.

7. Einrichtung nach einem oder mehreren der Ansprüche 1 bis 6, dadurch gekennzeichnet, daß das Steuerteil (15) ein Abfrageventil (19) in Verbindung mit der Sicherheitseinrichtung enthält.

8. Einrichtung nach einem oder mehreren der Ansprüche 1 bis 7, dadurch gekennzeichnet, daß das Steuerteil (15) ein Druckbegrenzungsventil (18) für das Arbeitsmedium enthält.

9. Einrichtung nach einem oder mehreren der Ansprüche 1 bis 8, dadurch gekennzeichnet, daß das Steuerteil (15) ein Ventil zur Spannkraftbegrenzung (17) des Arbeitsgerätes enthält.

10. Einrichtung nach einem oder mehreren der Ansprüche 1 bis 9, dadurch gekennzeichnet, daß das Steuerteil (15) ein Begrenzungsventil (16) für die Motorkraft enthält.

## Claims

1. A switch and control device for implements which can be actuated (hydraulically or pneumatically) by flowing working media, especially for the operation of bolting tongs (1) for the bolting of sucker rods and of casings and production pipes of the drilling industry, wherein a power part (10) connected to the forward flow (11) of the working medium has two connections (13, 14) which are located on the flow-off side and one connection (13) of which is connected to a tank return line and the other to a control part (15) for controlling the opening cross-section of the connection located on the tank side.

2. A device as claimed in claim 1, wherein the control element located within the power part (10) is a piston-shaped valve body (22) with surfaces of equal size on the two end faces and with a bore (24) which extends in the direction of the movement of the valve body and which has a conical widening (24a) at its end located on the inflow side, and wherein the inflow side of the valve body has a favorable shape in flow terms, the valve body resting against a valve seat (23), in the closing position, by means of the said inflow side.

3. A device as claimed in claims 1 and/or 2, wherein the piston bore is equipped with a flow-limiting nozzle (25).

4. A device as claimed in one or more of claims 1 to 3, wherein the power part (10) is designed as a screw-in cartridge (21) for direct installation in a hand-lever valve section.

5. A device as claimed in one or more of claims 1 to 4, wherein the control part (15) assigned to the power part (10) consists of several control units held parallel to one another and assigned to different functions.

6. A device as claimed in one or more of claims 1 to 5, wherein the control part (15) contains an emergency shut-off valve (20) for the implement (12).

7. A device as claimed in one or more of claims 1 to 6, wherein the control part (15) contains an interrogation valve (19) in conjunction with the safety device.

8. A device as claimed in one or more of claims 1 to 7, wherein the control part (15) contains a pressure-limiting valve (18) for the working medium.

9. A device as claimed in one or more of claims 1 to 8, wherein the control part (15) contains a valve for limiting the clamping force (17) of the implement.

10. A device as claimed in one or more of claims 1 to 9, wherein the control part (15) contains a limiting valve (16) for the motor power.

**Revendications**

1. Dispositif de commutation et de commande pour des outils pouvant être actionnés par des agents de travail en écoulement (hydrauliques ou pneumatiques), en particulier pour le fonctionnement de pinces à visser (1) en vue du vissage des tiges de pompe, des tubes de tubage et des tubes de production de l'industrie de forage, caractérisé par une unité de puissance (10) raccordée à l'arrivée (11) de l'agent de travail et comportant deux raccords d'évacuation (13, 14) dont l'un (13) est raccordé à une conduite de retour vers le réservoir et l'autre, à une unité de commande (15) pour commander la section d'ouverture du raccord vers le réservoir.

2. Dispositif suivant la revendication 1, caractérisé en ce qu'à titre d'élément de commande dans l'unité de puissance (10), est prévu un obturateur en forme de piston (22) dont les deux faces d'about présentent des superficies égales et qui comporte une forure (24) s'étendant dans le sens du déplacement de l'obturateur cette forure présentant, à son extrémité d'admission, un élargissement conique (24a) et le côté d'admission de l'obturateur étant façonné d'une manière favorable à l'écoulement, ce côté s'appliquant, dans la position de fermeture, contre un siège de valve (23).

3. Dispositif suivant les revendications 1 et/ou 2, caractérisé en ce que la forure du piston est garnie d'un ajutage (25) qui limite le débit.

4. Dispositif suivant une ou plusieurs des revendications 1 à 3, caractérisé en ce que l'unité de puissance (10) a la forme d'une cartouche à visser (21) pouvant être incorporée directement dans une section à valve de levier.

5. Dispositif suivant une ou plusieurs des revendications 1 à 4, caractérisé en ce que l'unité de commande (15) associée à l'unité de puissance (10) est formée de plusieurs unités de commande disposées parallèlement les unes aux autres et associées à diverses fonctions.

6. Dispositif suivant une ou plusieurs des revendications 1 à 5, caractérisé en ce que l'unité de commande (15) comprend une valve d'arrêt en cas d'urgence (20) pour l'outil (12).

7. Dispositif suivant une ou plusieurs des revendications 1 à 6, caractérisé en ce que l'unité de commande (15) comprend une valve d'interrogation (19) raccordée au dispositif de sécurité.

8. Dispositif suivant une ou plusieurs des revendications 1 à 7, caractérisé en ce que l'unité de commande (15) comprend une valve limiteuse de pression (18) pour l'agent de travail.

9. Dispositif suivant une ou plusieurs des revendications 1 à 8, caractérisé en ce que l'unité de commande (15) comprend une valve (17) pour limiter la force de serrage de l'outil.

10. Dispositif suivant une ou plusieurs des revendications 1 à 9, caractérisé en ce que l'unité de commande (15) comprend une valve (16) limitant la force du moteur.

FIG.1

FIG.2

**FIG. 3**

Motorkraftbegrenzung 16

Spannkraftbeg. 17

Druckbegrenz. für Versorgung 18

Abfrage Sicherheitseinr. 19

Abschaltung Not-Aus 20

15

Steuerung-Hubzylinder 14

10

11

11a

13

Hubzylinder

Zylinder-Kontervorrichtung

Steuerung Kontervorrichtung

Wechselventil

12

Motor-Steuerung

Gebräuchlicher Hydraulik Kreislauf

T

P

2

FIG. 4